# EUROPEAN PATENT APPLICATION

(11) **EP 4 847 295 A1**
(43) Date of publication of application: **02.12.2026**
(21) Application number: 25863793.3
(22) Date of filing: 24.06.2025
(51) Int. Cl.: B60L 3/12, B60W 40/10, B60W 50/14, G07C 5/08, B60W 50/00

(54) **ELECTRONIC DEVICE, RECORDING MEDIUM, AND METHOD FOR ANALYZING VEHICLE DRIVING PATTERN THEREOF**

(30) Priority: 06.09.2024 KR 20240121709
(71) Applicant: LG Energy Solution, Ltd., Seoul 07335 (KR)
(72) Inventor: KIM, Kangsan, Yuseong-gu, Daejeon 34122 (KR); SEO, Bo Kyung, Yuseong-gu, Daejeon 34122 (KR); KIM, Jangkyum, Yuseong-gu, Daejeon 34122 (KR)
(74) Representative: Plasseraud IP
(86) International application number: PCT/KR2025/008808
(87) International publication number: WO 2026/054261

(57) **Abstract**

Provided is an electronic device for clustering data pertaining to a driving pattern of a vehicle. The electronic device may be configured to: acquire a plurality of pieces of driving data for a plurality of vehicles; generate speed distribution data corresponding to each of the plurality of pieces of driving data; generate a plurality of features pertaining to a driving pattern on the basis of the speed distribution data of each of the plurality of pieces of driving data; cluster the plurality of features into a plurality of clusters on the basis of a clustering algorithm and an index for evaluating the clustered result; generate a driving pattern kernel indicating a driving pattern of each of the plurality of clusters; and determine, on the basis of similarities to the plurality of generated driving pattern kernels, a driving pattern of a feature generated after the plurality of driving pattern kernels are generated.

## Description

### Technical Field

The present disclosure relates to an electronic apparatus, a recording medium, and a method for analyzing a driving pattern of a vehicle thereof. More specifically, the present disclosure relates to a technology of analyzing a vehicle driving pattern of an electric vehicle user and providing an energy efficiency improvement method for each driving pattern.

This application claims the benefit of Korean Patent Application No. 2024-0121709, filed on September 6, 2024, in the Korean Intellectual Property Office, the disclosure of which is incorporated herein by reference in its entirety.

### Background Art

An ordinary energy efficiency improvement method is performed in the way of quantifying the impact of the driving practice of an electric vehicle user, at the time of driving the electric vehicle, on the energy efficiency and therethrough identifying what factor most affects the energy efficiency and evaluating the driving action. However, since various factors affects the energy efficiency at the same time, it may be impossible to provide an optimal energy efficiency improvement method with an analysis to a degree of quantifying the impact of an individual factor. In other words, with a simple method alone of improving a particular factor, a substantial energy efficiency improvement method may not be expected.

In order to solve such difficulty, the method of separately analyzing the particular factor under an identical condition has been invented. However, even according thereto, since the number of cases to be analyzed may be exponentially increased depending on the number of conditions and factors to be considered, a difficulty such as a large amount of required costs consumed in providing the energy efficiency improvement or the like may arise. Thus, the method of providing a user-customized optimal energy efficiency improvement method while efficiently and accurately analyzing a variety of the driving-associated data on the electric vehicle user is required.

### Detailed Description of the Invention

### Technical Goals

Example embodiments of the present disclosure are proposed in order to solve the above-described difficulty and to provide an electronic apparatus, a recording medium, and a method for analyzing a driving pattern of a vehicle.

However, the goals to be achieved by example embodiments of the present disclosure are not limited to the objectives described above and other objects may be clearly understood from the following example embodiments.

### Technical solutions

According to an example embodiment, there is provided an electronic apparatus including a transceiver, a processor, and one or more memories configured to store one or more instructions, and when the one or more instructions are executed, the processor is configured to acquire a plurality of pieces of driving data on a plurality of vehicles, generate speed distribution data corresponding to each of the plurality of pieces of driving data, generate a plurality of features on driving patterns based on the speed distribution data corresponding to each of the plurality of pieces of driving data, cluster the plurality of features into a plurality of clusters based on a clustering algorithm and an index evaluating a clustering result, generate a driving pattern kernel showing a driving pattern of each of the plurality of clusters, and determine, based on similarity to the generated plurality of driving pattern kernels, a driving pattern of a feature generated after the plurality of driving pattern kernels is generated.

Each of the plurality of pieces of driving data may include information on speeds over time during driving of a respective one of the plurality of vehicles.

When the one or more instructions are executed, the processor may be configured to identify one or more driving action types based on first driving data among the plurality of pieces of driving data, identify a speed range of one or more driving actions corresponding to a first type among the one or more driving action types, identify, for each speed range of the one or more driving actions, a driving action start speed and a driving action end speed, estimate each of a distribution of driving action start speeds corresponding to the first type and a distribution of driving action end speeds corresponding to the first type, and generate first speed distribution data including the distribution of the driving action start speeds and the distribution of the driving action end speeds.

When the one or more instructions are executed, the processor may be configured to further identify a traveling distance of the one or more driving actions corresponding to the first type, the distribution of the driving action start speeds may be a probability distribution estimated by granting a weight to the traveling distance of the one or more driving actions, and the distribution of the driving action end speeds may be a probability distribution estimated by granting a weight to the traveling distance of the one or more driving actions.

When the one or more instructions are executed, the processor may be configured to generate, based on the first speed distribution data, a first feature showing a frequency of a speed range corresponding to each of the one or more driving action types.

When the one or more instructions are executed, the processor may be configured to classify the plurality of features into a predetermined number of data sets by sampling the plurality of features, determine, based on the clustering algorithm and the index evaluating the clustering result, a number of clusters, which corresponds to each of the predetermined number of data sets, perform first clustering, of the plurality of features which is included in each of the data sets, into clusters of which a number is the number of clusters determined for each of the data sets, generate a kernel of each of one or more clusters generated by performing the first clustering, determine, based on the clustering algorithm and the index evaluating the clustering result, an optimal number of clusters, which corresponds to the generated one or more kernels, and perform second clustering of the one or more kernels into clusters of which a number is the optimal number of clusters, and the driving pattern kernel may be a kernel showing a driving pattern of each of clusters of which number is the optimal number of clusters and which are generated by performing the second clustering.

The similarity between the feature, generated after the plurality of driving patterns kernels is generated, and the generated plurality of driving patten kernels may be calculated based on a Jensen-Shannon divergence (JSD) technique that calculates similarity between probability distributions.

When the one or more instructions are executed, the processor is configured to determine, by identifying that the feature generated after the plurality of driving pattern kernels is generated corresponds to a first driving pattern kernel of which a value of similarity is greater than or equal to a threshold value among the plurality of driving patterns, the driving pattern of the feature generated after the plurality of driving pattern kernels is generated.

When the one or more instructions are executed, the processor is configured to perform clustering of a first data set among the predetermined number of data sets a plurality of times so that numbers of clusters are different depending on the clustering algorithm, and determine a number of clusters corresponding to the first data set based on a result of performing the clustering the plurality of times and the index evaluating the clustering result.

The index may include a first index, a second index, and a third index, and when the one or more instructions are executed, the processor may be configured to calculate, based on the result of performing the clustering the plurality of times, each of the first index based on a number of clusters, the second index based on a number of clusters, and the third index based on a number of clusters, and determine an optimal number of clusters for the first data set based on a first number of clusters corresponding to a maximum value or a minimum value of the first index based on the calculated number of clusters, a second number of clusters corresponding to a maximum value or a minimum value of the second index based on the calculated number of clusters, and a third number of clusters corresponding to a maximum value or a minimum value of the third index based on the calculated number of clusters.

The electronic apparatus may be configured to perform clustering of the one or more kernels a plurality of times so that numbers of clusters are different depending on the clustering algorithm, and determine an optimal number of clusters corresponding to the one or more kernels based on a result of performing the clustering the plurality of times and the index evaluating the clustering result.

The index may include a first index, a second index, and a third index, and when the one or more instructions are executed, the processor may be configured to calculate, based on the result of performing the clustering the plurality of times, each of the first index based on a number of clusters, the second index based on a number of clusters, and the third index based on a number of clusters, and determine an optimal number of clusters corresponding to the one or more kernels based on a first number of clusters corresponding to a maximum value or a minimum value of the first index based on the calculated number of clusters, a second number of clusters corresponding to a maximum value or a minimum value of the second index based on the calculated number of clusters, and a third number of clusters corresponding to a maximum value or a minimum value of the third index based on the calculated number of clusters.

When the one or more instructions are executed, the processor is further configured to identify a driving road type corresponding to the determined driving pattern, identify respective energy efficiency distributions of one or more driving pattern kernels corresponding to the driving road type among the plurality of driving pattern kernels, and provide, based on an optimal energy efficiency distribution among the identified respective energy efficiency distributions of the one or more driving pattern kernels, an energy efficiency improvement method corresponding to the feature of which the driving pattern is determined.

According to another example embodiment, there is also provided a method of analyzing a driving pattern of a vehicle, the method performed by an electronic apparatus and including acquiring a plurality of pieces of driving data on a plurality of vehicles, generating speed distribution data corresponding to each of the plurality of pieces of driving data, generating a plurality of features on driving patterns based on the speed distribution data corresponding to each of the plurality of pieces of driving data, clustering the plurality of features into a plurality of clusters based on a clustering algorithm and an index evaluating a clustering result, generating a driving pattern kernel showing a driving pattern of each of the plurality of clusters, and determine, based on similarity to the generated plurality of driving pattern kernels, a driving pattern of a feature generated after the plurality of driving pattern kernels is generated.

According to still another example embodiment, there is also provided a non-transitory computer-readable recording medium in which a program for executing a method of analyzing a driving pattern of a vehicle on a computer is recorded, the method including acquiring a plurality of pieces of driving data on a plurality of vehicles, generating speed distribution data corresponding to each of the plurality of pieces of driving data, generating a plurality of features on driving patterns based on the speed distribution data corresponding to each of the plurality of pieces of driving data, clustering the plurality of features into a plurality of clusters based on a clustering algorithm and an index evaluating a clustering result, generating a driving pattern kernel showing a driving pattern of each of the plurality of clusters, and determine, based on similarity to the generated plurality of driving pattern kernels, a driving pattern of a feature generated after the plurality of driving pattern kernels is generated.

### Effects of the Invention

According to the present disclosure, it is possible to provide a customized improvement method by evaluating energy efficiency based on a road environment on which a user drives and a driving practice.

According to the present disclosure, it is possible to classify any driving practice into a predetermined type and induce therethrough switching to a type having optimal energy efficiency in an identical road type.

Effects of the present disclosure are not limited to those described above and other effects may be made apparent to those skilled in the art from the following description of the accompanying claims.

### Brief Description of Drawings

FIG. 1 is a block diagram illustrating an electronic apparatus according to an example embodiment.
FIG. 2 is a flowchart illustrating a method of analyzing a driving pattern of a vehicle according to an example embodiment.
FIGS. 3A through 3E illustrate a feature generation process according to an example embodiment.
FIG. 4 illustrates a process of clustering features according to an example embodiment.
FIG. 5 illustrates a primary clustering process according to an example embodiment.
FIG. 6 illustrates a secondary clustering process according to an example embodiment.
FIG. 7 illustrates a process of determining a driving pattern of a feature according to an example embodiment.
FIG. 8 illustrates an energy efficiency distribution of each driving pattern kernel according to an example embodiment.
FIGS. 9A through 9B illustrate a process of providing an energy efficiency improvement method according to an example embodiment.

### Mode for Carrying Out the Invention

Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

In the entire specification, when an element is referred to as "including" another element, the element should not be understood as excluding other elements so long as there is no special conflicting description, and the element may include at least one other element. In addition, the terms "unit" and "module", for example, may refer to a component that exerts at least one function or operation, and may be realized in hardware or software, or may be realized by combination of hardware and software.

Throughout the specification, expression "at least one of a, b, and c" may include 'a only', 'b only', 'c only', 'a and b', 'a and c', 'b and c', or 'all of a, b, and c'.

In the following description, example embodiments of the present disclosure will be described in detail with reference to the accompanying drawings so that those skilled in the art can easily carry out the present disclosure. However, the present disclosure may be embodied in many different forms and is not limited to the example embodiments described herein.

Hereinafter, example embodiments of the present disclosure with respect to an electronic apparatus for clustering data on a battery charging pattern will be described in detail with reference to the drawings.

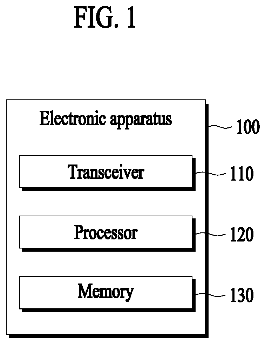

FIG. 1 is a block diagram illustrating an electronic apparatus according to an example embodiment.

Referring to FIG. 1, an electronic apparatus 100 may include a transceiver 110, a processor 120, and a memory 130 according to an example embodiment. Particular elements associated with the present example embodiment are illustrated with respect to the electronic apparatus 100 which is illustrated in FIG. 1. Thus, those skilled in the art associated with the present example embodiment may understand that other elements in general use may be further included in addition to the elements illustrated in FIG. 1.

For example, the electronic device 100 may include a communication device including one or more transceivers 110, an input part, and an output part. The communication device may be a device for performing wired/wireless communication and communicate with an external electronic device. The external electronic device may be a terminal or a server. Also, a communication technology used by the communication device may include Global System for Mobile communication (GSM), Code Division Multi Access (CDMA), Long Term Evolution (LTE), 5th Generation, (5G), a wireless local area network (WLAN), Wireless-Fidelity (Wi-Fi), Bluetooth, radio frequency identification (RFID), infrared data association (IrDA), ZigBee, near field communication (NFC), or the like. The input part may be, for example, a keypad or a keyboard in a traditional form, a mouse, a microphone that receives a voice signal, a camera, or other various forms of input devices that detect or receive various forms of user inputs. The output part may be, for example, a display that outputs an image, a speaker that outputs a sound, a haptic device that generates vibration, or other various forms of output devices.

According to an example embodiment, the electronic apparatus 100 may be a server that acquires and processes data on a plurality of vehicles. Specifically, the data on the plurality of vehicles may include a plurality of pieces of driving data on the plurality of vehicles. For example, the plurality of pieces of driving data may be acquired through the transceiver 110 of the electronic apparatus 100 from at least one of on-board diagnostics (OBD), a battery management system (BMS), and a device in which driving data is stored in advance (e.g., a database) that are mounted to each vehicle. A scheme in which the electronic apparatus 100 acquires the plurality of pieces of driving data is not limited to the above-described example. It may be clearly understood to those skilled in the art that the electronic apparatus 100 may acquire the plurality of pieces of driving data through the transceiver 110 from various devices for communication. A type of the electronic apparatus 100 is not limited thereto. Various example embodiments of the present disclosure may be applied to various devices that may acquire and processes data on a vehicle.

The processor 120 may control overall operations of the electronic apparatus 100 and may process data and a signal. The processor 120 may be formed with at least one hardware unit. In addition, the processor 120 may be operated by one or more software modules generated by executing program code stored in the memory 130. Since the processor 120 may include a memory, the processor 120 may control the overall operations of the electronic device 100 and process the data and the signal by executing program code stored in the memory.

The processor 120 may be implemented as a computer or a device similar thereto depending on hardware, software, or a combination thereof. In terms of the hardware, the processor 120 may be implemented in a form of an electronic circuit that performs a control function by processing an electrical signal. In terms of the software, the processor 120 may be implemented in a form of a program that operates the processor 120 as the hardware. Meanwhile, unless additionally described below, an operation of the electronic apparatus may be construed as being performed by control by the processor 120. In other words, when modules implemented in a system for analyzing a driving pattern of a vehicle are executed, it may be construed that the modules control the processor 120 so that the processor 120 performs the following operations of the electronic apparatus 100.

The memory 130 may store a variety of information. The memory 130 may store data temporarily or semipermanently. For example, data on an operating system (OS) for operating the electronic apparatus 100 may be stored in the memory 130 of the electronic apparatus 100. An example of the memory 130 may include a hard disk drive (HDD), a solid state drive (SDD), a flash memory, a read-only memory (ROM), a random access memory (RAM), or the like. The memory 130 may be provided in an embedded type or a detachable type.

In summary, various example embodiments may be implemented through various devices. For example, various example embodiments may be implemented by hardware, firmware, software, a combination thereof, or the like.

In a case of implementation by the hardware, a method according to various example embodiments may be implemented by one or more of application specific integrated circuits (ASICs), digital signal processors (DSPs), digital signal processing devices (DSPDs), programmable logic devices (PLDs), field programmable gate arrays (FPGAs), a processor, a controller, a microcontroller, a microprocessor, or the like.

In a case of implementation by the firmware or the software, a method according to various example embodiments may be implemented in a form of a module, a procedure, a function, or the like that performs the above-described functions or operations. For example, software code may be stored in a memory to be operated by a processor. The memory may be positioned inside or outside the processor and may send and receive data to and from the processor through various devices publicly known in advance.

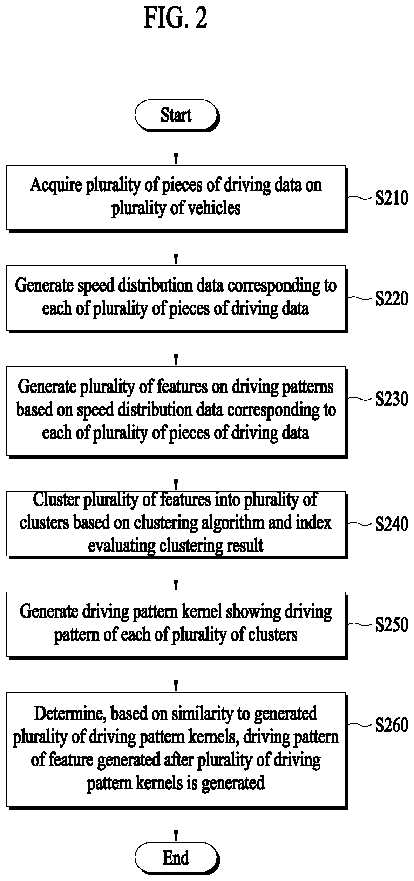

FIG. 2 is a flowchart illustrating a method of analyzing a driving pattern of a vehicle according to an example embodiment.

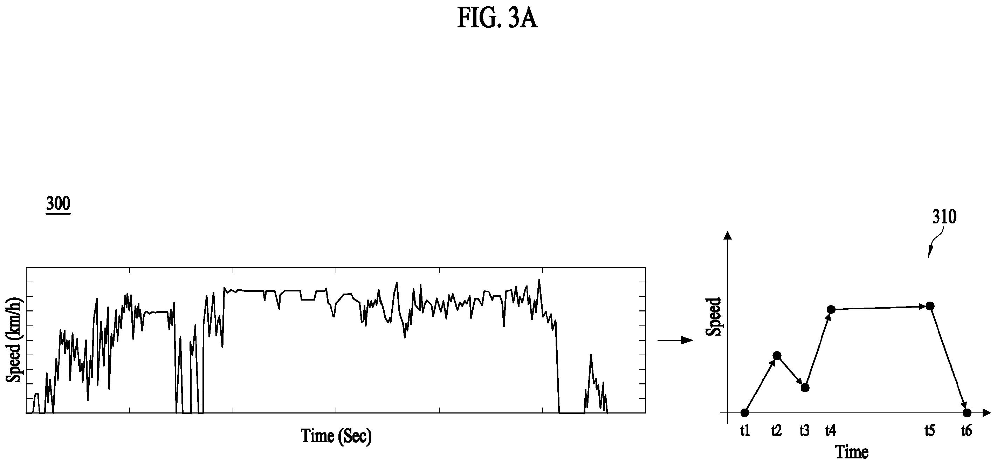

In operation S210, the electronic apparatus 100 may acquire a plurality of pieces of driving data on a plurality of vehicles. Here, the plurality of pieces of driving data may individually include information on speeds over time during driving of a respective one of the plurality of vehicles. Specifically, each piece of driving data may be time series data showing a series of speed changes over time in a time for which a corresponding vehicle is driven one time. A detailed example of acquired driving data will be described below in detail with reference to FIG. 3A.

In operation S220, the electronic apparatus 100 may generate speed distribution data corresponding to each of the plurality of pieces of driving data. Specifically, for each piece of driving data, the electronic apparatus 100 may identify one or more driving action types corresponding to each piece of driving data, identify a speed range of one or more driving actions corresponding to each of the one or more driving action types, and identify, for each speed range of the one or more driving actions, a driving action start speed and a driving action end speed.

Here, the one or more driving action types may be a predefined driving practice type and may be, for example, five subdivided types of start acceleration, stop deceleration, speed changing acceleration, speed changing deceleration, and uniform speed. A start acceleration type may be, for example, a type in which a gradient of speed is larger than a predetermined value and that starts in a stationary status. A stop deceleration type may be, for example, a type in which the gradient of speed is less than the predetermined value and that ends in the stationary status. A speed changing acceleration type may be, for example, a type in which the gradient of speed is larger than the predetermined value and that starts in a status other than the stationary status. A speed changing deceleration type may be, for example, a type in which the gradient of speed is less than the predetermined value and that ends in the status other than the stationary status. The uniform speed may be a type other than the above-described four types and the stationary status. That is, the electronic apparatus 100 may identify various driving action types included in each piece of driving data and identify a speed range in a driving period corresponding to each driving action type. Meanwhile, the driving action start speed may be a start speed in a corresponding driving period, which is identified based on the speed range in the driving period corresponding to each driving action type, and the driving action end speed may be an end speed in the corresponding driving period.

The electronic apparatus 100, which identifies, based on each speed range, the driving action start speed and the driving action end speed which correspond to each driving action, may estimate each of a distribution of driving action start speeds corresponding to each driving action type and a distribution of driving action end speeds corresponding to each driving action type and may generate speed distribution data including both of the distribution of the driving action start speeds and the distribution of the driving action end speeds, which are estimated for each driving action type. Here, each of the distribution of the driving action start speeds and the distribution of the driving action end speeds may be a probability distribution of a target speed, and accordingly, the speed distribution data may include a plurality of probability distributions. In addition, a probability distribution of a start speed and a probability distribution of an end speed each may be, for example, a probability density function estimated by using kernel density estimation (KDE). The KDE may be a technique in which a kernel function that is a type of probability distribution is applied to a target data point and then a probability density function is generated by obtaining a sum of kernel functions over all data points and approximating entire data. Accordingly, a probability density function in a form of a continuous and smooth curve may be generated.

According to an example embodiment, the electronic apparatus 100 may further identify a traveling distance of the one or more driving actions corresponding to each driving action type in order to estimate each of the distribution of the driving action start speeds and the distribution of the driving action end speeds, which correspond to each driving action type. Accordingly, the distribution of the driving action start speed may be a probability distribution estimated by granting a weight to the traveling distance of the one or more driving actions, and the distribution of the driving action end speed may be a probability distribution estimated by granting a weight to the traveling distance of the one or more driving actions. That is, when multiple driving actions corresponding to one driving action type are present, each speed distribution may be a probability distribution to which the multiple driving actions are applied so that data has a higher probability as the data is data corresponding to a driving action of which a traveling distance is farther. Meanwhile, according to example embodiments, the electronic apparatus 100 may further identify consumed energy data on the one or more driving actions corresponding to each driving action type. Information on the consumed energy data may be information additionally acquired in order to give a weight, in a distinguished manner, to multiple driving actions corresponding to a stop type when a predefined driving action type includes a stop action.

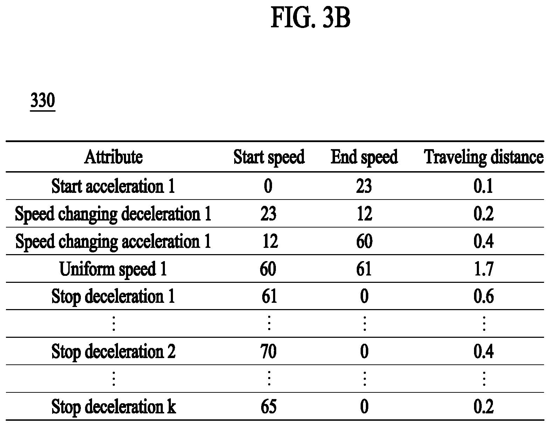

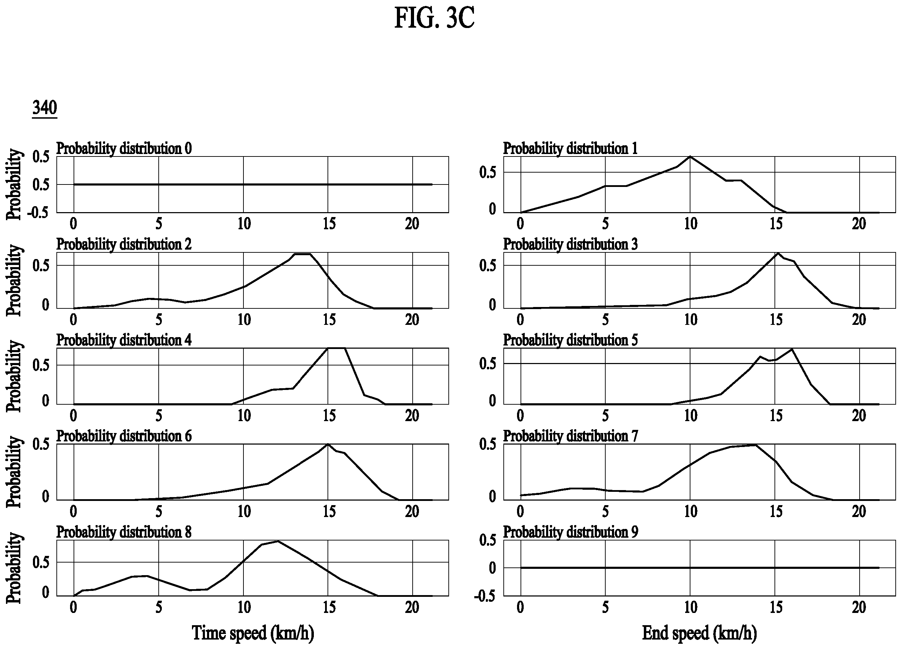

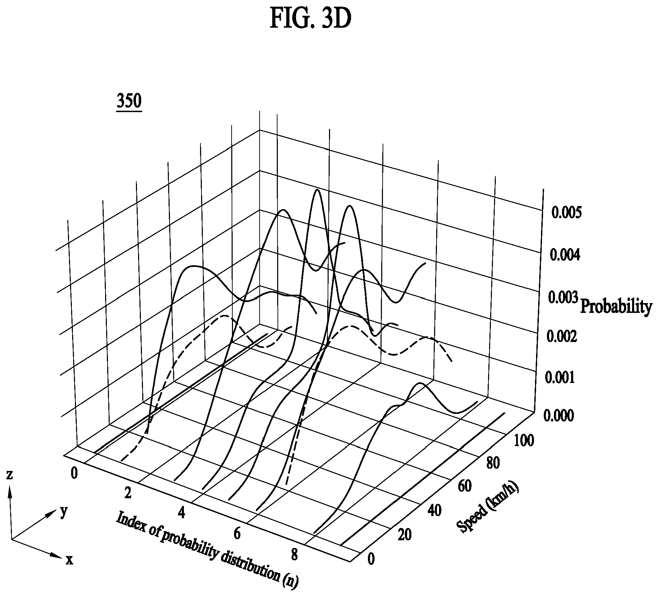

A detailed example embodiment in which the electronic apparatus 100 estimates each of the distribution of the driving action start speeds and the distribution of the driving end speeds, which correspond to each driving action type, will be described below in detail with reference to FIGS. 3B and 3C. A detailed example embodiment of the speed distribution data generated therethrough will be described below in detail with reference to FIG. 3D.

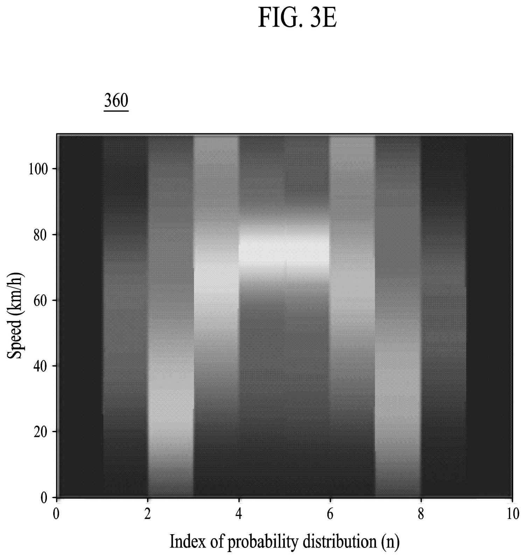

In operation S230, the electronic apparatus 100 may generate a plurality of features on driving patterns based on the speed distribution data on each of the plurality of pieces of driving data. Specifically, the electronic apparatus 100 may generate, based on the speed distribution data, a feature showing a frequency of a speed range corresponding to each of the one or more driving action types. That is, the feature may be generated for each of respective pieces of speed distribution data on the pieces of driving data and may show a driving pattern identified based on corresponding speed distribution data. A detailed example of the generated feature will be described below in detail with reference to FIG. 3E.

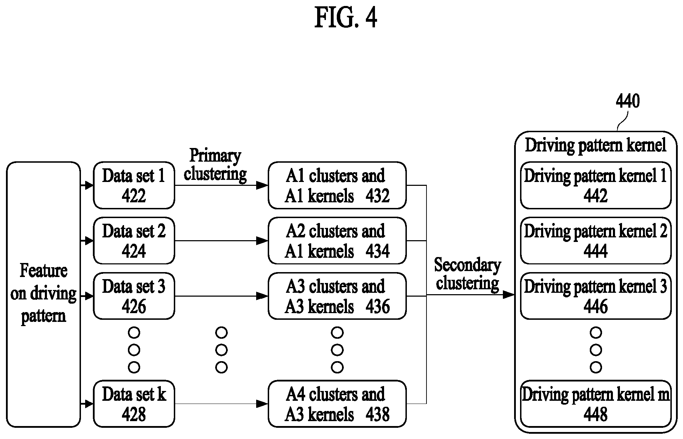

In operation S240, the electronic apparatus 100 may cluster the plurality of features into a plurality of clusters based on a clustering algorithm and an index evaluating a clustering result. In other words, the plurality of features may be classified into an identical cluster depending on similarity. A detailed example embodiment of a process of clustering the plurality of features will be described below in detail with reference to FIGS. 4 through 6.

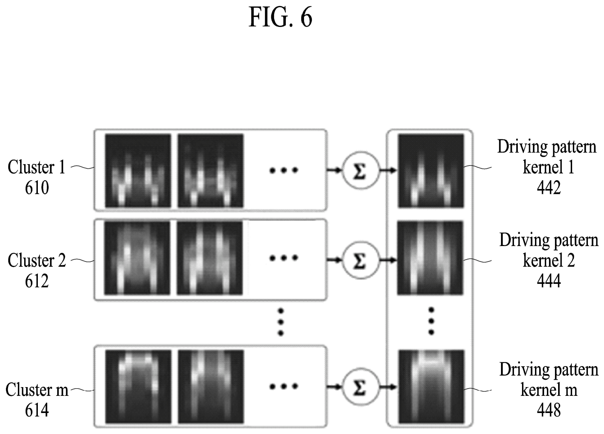

In operation S250, the electronic apparatus 100 may generate a driving pattern kernel showing a driving pattern of each of the plurality of clusters. Here, a kernel may be data showing characteristics of pieces of data in a cluster and may have a form identical to that of the feature. In other words, the driving pattern kernel may be data representing the plurality of features which is in a corresponding cluster and may be generated by overlapping features in the corresponding cluster in an example embodiment. The driving pattern kernel generated as such may be a driving pattern itself that is defined through the present disclosure. A detailed example of generating the driving pattern kernel will be described below in detail with reference to FIG. 6.

In operation S260, the electronic apparatus 100 may determine, based on similarity to a generated plurality of driving pattern kernels, a driving pattern of a feature generated after the plurality of driving pattern kernels is generated. In other words, the electronic apparatus 100 may determine the driving pattern of the generated feature by determining to which kernel among the plurality of driving pattern kernels the feature on the driving pattern newly generated after the plurality of driving pattern kernel is most similar. The similarity between the generated feature and the plurality driving pattern kernels may be calculated, for example, based on a Jensen-Shannon divergence (JSD) technique that calculates similarity between probability distributions. Specifically, the JSD technique may be a technique that quantifies and shows a difference between two probability distributions based on a distance between the two distributions. The similarity calculated through the JSD technique may intuitively show the similarity between the generated feature and the plurality driving pattern kernels. A scheme of calculating the similarity is not limited to the JSD technique. It may be clearly understood to those skilled in the art that the similarity between the newly generated feature and each of the plurality of driving pattern kernels may be calculated through various schemes for quantifying and showing the similarity between the two distributions.

The electronic apparatus 100 may identify, based on the similarity calculated as such, a driving pattern kernel having a value of similarity greater than or equal to a threshold value among the plurality of driving pattern kernels as corresponding to the driving pattern of the newly generated feature. That is, each driving pattern kernel may be representative data that shows a characteristic of each of the clusters into which the plurality of features is clustered as described above. Without inconvenience of newly performing clustering of a number of pieces of data as driving data is additionally acquired and a feature is generated based thereon, and through the above-described process, the electronic apparatus 100 may substantially identify whether the newly generated feature may be classified into a cluster represented by some driving pattern. Through this, although any driving data is acquired, the electronic apparatus 100 may promptly and easily understand a driving pattern of corresponding driving data based on similarity between a feature generated for the corresponding data and the plurality of driving pattern kernels which is generated in advance.

FIGS. 3A through 3E illustrate a feature generation process according to an example embodiment.

According to an example embodiment, the electronic apparatus 100 may subdivide each of an acquired plurality of pieces of driving data according to a driving action type. Referring to FIG. 3A, driving data 300 may be in a form of a graph showing a speed over time during one time of driving of a corresponding predetermined vehicle. At this point, an X-axis of the graph may be a time (sec), a Y-axis of the graph may be a speed (kilometer per hour (km/h)). The electronic apparatus 100 may identify five driving action types (namely, start acceleration, stop deceleration, speed changing acceleration, speed changing deceleration, and uniform speed) based on a series of speed changes in the driving data 300. In other words, the electronic apparatus 100 may identify a period from t1 to t2, a period from t2 to t3, a period from t3 to t4, a period from t4 to t5, and a period from t5 to t6 each as corresponding to one of the driving action types. Meanwhile, such identification of periods corresponding to the five types is merely an example. The number of driving action types identified for each piece of driving data and the number of time periods corresponding to each driving action type may vary depending on example embodiments (that is, a plurality of driving actions corresponding to one driving action type may be present).

Then, the electronic apparatus 100 may subdivide driving data to correspond to each driving action. FIG. 3A may be an example of subdividing the driving data and may be a graph simplifying and showing a speed change over a time period of each driving action as described above. The electronic apparatus 100 may further easily identify a speed range of each driving action by subdividing the driving data 300 as such.

Referring to FIG. 3B, the electronic apparatus 100 may identify, based on the speed range corresponding to each driving action, the driving action type (or attribute), a start speed, an end speed, and a traveling distance which correspond to each driving action. Pieces of information on each driving action may be arranged, for example, in a form of a list such as a table 330. As k driving actions corresponding to a stop deceleration type are identified in the table 330, with respect to estimation of a driving action start speed and a stop speed distribution of the stop deceleration type, the electronic apparatus 100 may allow each of a start speed and an end speed of "Stop deceleration 1" having a farthest traveling distance to have a higher probability.

Then, referring to FIG. 3C, the electronic apparatus 100 may estimate a time speed distribution and an end speed distribution corresponding to each driving action type as represented by reference numeral 340. In an example in which all driving actions individually corresponding to the five types, start acceleration, stop deceleration, speed changing acceleration, speed changing deceleration, and equal velocity, are identified, five start speed distributions and five end speed distributions, which are individually estimated for the five types, each may be estimated as represented by reference numeral 340. Meanwhile, each speed distribution graph may have an x-axis as a start speed or end speed (km/h), and a y-axis may be a probability. As such, each speed distribution graph generated to show a probability based on a speed may have an index different from another. For example, as represented by reference numeral 340, ten speed distribution graphs in total may be represented by indexes 0 to 9. At this point, the indexes may be granted in order of a start speed distribution and an end speed distribution that correspond to an identical driving action type. That is, indexes of probability distributions 0, 1, ..., and 9 may be granted in order of a start speed distribution and an end speed distribution of a start acceleration type, a start speed distribution and an end speed distribution of a speed changing acceleration type, a start speed distribution and an end speed distribution of a uniform speed type, a start speed distribution and an end speed distribution of a speed changing deceleration type, and a start speed distribution and an end speed distribution of a stop deceleration type.

According to an example embodiment, the electronic apparatus 100 may generate speed distribution data in which all speed distributions are listed so that all the estimated start speed distributions and end speed distributions may be identified immediately. Referring to FIG. 3D, the electronic apparatus 100 may generate speed distribution data 350 in a form in which all the start speed distributions and end speed distributions, which are individually estimated for the driving action types as represented by reference numeral 340 of FIG. 3C, are listed. Accordingly, the speed distribution data 350 which includes ten speed distributions that are probability distribution 0 to probability distribution 9 may be generated. Here, the speed distribution data may have a form of a three-dimensional graph of which an x-axis shows an index of a probability distribution, a y-axis shows a speed, and a z-axis shows a probability of the speed.

Referring to FIG. 3E, the electronic apparatus 100 may generate, based on the speed distribution data 350, a feature 360 showing a frequency of a speed range corresponding to each of the five driving action types. The feature 360 may be, for example, an two-dimensional image generated by projecting the corresponding speed distribution data 350 based on the z-axis. Specifically, the feature 360 may be a visualized form of data that is formed with the x-axis and the y-axis and in which the speed distribution data 350 is viewed in a -z direction. Accordingly, the feature 360 may be the two-dimensional image of which an x-axis is a probability distribution index (n) and a y-axis is the speed (km/h).

The feature 360 generated based on the speed distribution data 350 may be in a form in which the probability distributions are listed in a form in which a variety of brightness is shown in each probability distribution. Here, brightness in the feature 360 may be a frequency of a corresponding speed. In other words, higher brightness in each probability distribution included in the feature 360 may be a speed at which a user frequently drives according to a driving action of a corresponding type. Accordingly, the feature 360 may show a practice or a tendency in driving, according to the driving action of the corresponding type, with respect to at what degree of speed the driving starts mainly and at what degree of speed the driving ends when the driving is performed. Specifically, since showing the start speed distribution and the end speed distribution of the start acceleration type, the start speed distribution and the end speed distribution of the speed changing acceleration type, the start speed distribution and the end speed distribution of the uniform speed type, the start speed distribution and the end speed distribution of the speed changing deceleration type, and the start speed distribution and the end speed distribution of the stop deceleration type in sequential order, the feature 360 may provide intuitive information on at what speed the driving starts mainly and at what speed the driving ends at a time of start acceleration driving, at what speed a driving starts mainly and at what speed the driving ends at a time of speed changing acceleration driving, or the like. As a more detailed example, probability distributions 2 and 3 of the feature 360 may show that when a user of a corresponding vehicle drives in the speed changing acceleration type, the user has a driving practice of starting driving mainly at a speed within a range from 20 to 40 km/h and ending the driving mainly at a speed within a range from 50 to 70 km/h.

The electronic apparatus 100 may generate a feature corresponding to each piece of driving data by performing, for each of the plurality of pieces of driving data, a process described through examples of FIGS. 3A through 3E. Thus, each piece of driving data may be ultimately formalized into the feature which has a form of the two-dimensional image of which a size is equal to another.

FIG. 4 illustrates a process of clustering features according to an example embodiment.

According to an example embodiment, as described above, the electronic apparatus 100 may classify a plurality of features into a predetermined number of data sets by sampling the plurality of features, determine, based on a clustering algorithm and an index evaluating a clustering result, the number of clusters, which corresponds to each of the predetermined number of data sets, and perform primary clustering, of the plurality of features which is included in each of the data sets, into clusters of which the number is the number of clusters determined for each of the data sets.

Then, the electronic apparatus 100 may generate a kernel of each of one or more clusters generated by performing the primary clustering, determine, based on the clustering algorithm and the index evaluating the clustering result, an optimal number of clusters, which corresponds to generated one or more kernels, and perform secondary clustering of the one or more kernels into clusters of which the number is the optimal number of clusters. The electronic apparatus 100 may generate a driving pattern kernel showing a driving pattern of each of the clusters, generated by performance of the secondary clustering as such, of which the number is the optimal number of clusters.

Referring to FIG. 4, a predetermined number (k) of data sets including data set 1 422, data set 2 424, ..., data set k 426 may be generated based on a feature on a plurality of driving patterns. The electronic apparatus 100 may sample the feature on the plurality of driving patterns into k data sets in order to generate the data sets. Sampling of the feature, for example, may be performed randomly. Each of the predetermined number of data sets, for example, may include at least some features. As a detailed example, 840,000 pieces of driving data in total may be acquired, so that 840,000 features in total may be generated, and when a k value is set to 100, the number of the at least some features, which is included in each data set, may be 8,400.

The electronic apparatus 100 may perform the primary clustering of each of the k data sets. As the primary clustering is performed, a plurality of clusters corresponding to each of the k data sets may be generated. Specifically, the data set 1 422 may be clustered into A1 clusters as a result of performing the primary clustering, and the data set 2 424 may be clustered into A2 clusters as a result of performing the primary clustering. The electronic apparatus 100 which performs the primary clustering for each data set may generate the kernel for each of the generated clusters. In other words, the A1 clusters and A1 kernels 432 corresponding thereto, the A2 clusters and A2 kernels 434 corresponding thereto, or the like may be generated. The kernel of each cluster may be data representing characteristics of a plurality of features in each cluster and may be a type of representative feature generated by overlapping a plurality of features in a cluster. The primary clustering may be performed as such, and through this, an amount of data may be significantly reduced. In an example in which hundreds of thousands of features are present, since the numbers of kernels generated through the first clustering, such as A1 and A2, each may be hundreds, the amount of the data may be significantly reduced.

Then, the electronic apparatus 100 may perform the secondary clustering of all kernels of A1 kernels, A2 kernels, and the like. That is, while the primary clustering is performed for each data set, the secondary clustering may be performed for all of a plurality of kernels representing the plurality of clusters generated as a result of performing the primary clustering. In addition, since the number of the plurality of kernels is largely decreased compared to the number of the plurality of features, a process of sampling data, which is performed earlier than the primary clustering, also may be omitted in consideration of a large number of pieces of the data. The electronic apparatus 100 may cluster the plurality of kernels into clusters, of which the number is an optimal number (m) of clusters by performing the secondary clustering therefor. A set 440 of driving pattern kernels may include a driving pattern kernel generated for each of the m clusters generated by the performance of the secondary clustering. The amount of the data reduced through the primary clustering may be reduced one more time by the performance of the secondary clustering. Accordingly, hundreds of thousands of features may be primarily reduced through the primary clustering and may finally be tens of pieces of data. A value of m which is the number of driving pattern kernels acquired by performance of clustering based on 840,000 pieces of data may be, for example, 25.

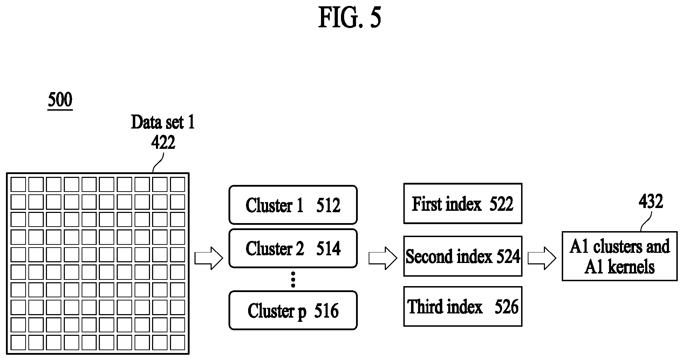

FIG. 5 illustrates a primary clustering process according to an example embodiment.

According to an example embodiment, the electronic apparatus 100 may perform clustering of each of a predetermined number of pieces of data a plurality of times so that the numbers of clusters are different depending on a clustering algorithm and determine the number of clusters corresponding to each data set based on a result of performing the clustering the plurality of times and an index evaluating a clustering result.

Referring to FIG. 5, the electronic apparatus 100 may perform the clustering of the data set 1 422 a plurality of times so that the number of clusters is p (i∈{2, 3, ..., p}) depending on the clustering algorithm. The electronic apparatus 100 may cluster the data set 1 422 the plurality of times so that the number of clusters is different each time the clustering is performed.

In an example embodiment, the clustering algorithm which is performed for a data set may be one of all types of clustering algorithms that may set the number of clusters as a parameter (that is, in which hyper-parameterization is allowed). For example, the clustering algorithm may be a hierarchical clustering algorithm that hierarchizes, based on similarity, at least some features included in each data set. Since calculating an initial distance matrix and then repeating a process of merger between close clusters or division into sub-clusters based thereon, the hierarchical clustering algorithm may have an advantage of a greatly small amount of calculation.

In another example embodiment, the clustering algorithm may be a K-means clustering algorithm that clusters the at least some features included in each data set based on a centroid. The K-means clustering algorithm may perform the clustering by allocating, near an initially selected centroid, a data point to a closest cluster and repeating calculation of centroids of clusters until the centroids are identical. Since such repeated calculation may be processed in parallel, the K-means clustering algorithm may have an advantage of faster calculation for a large-scale data set.

Then, the electronic apparatus 100 may determine an optimal number of clusters for the data set 1 422 based on an index of each of respective results of the plurality of times of performance of the clustering. The index may include, for example, a first index 522, a second index 524, and a third index 526. The electronic apparatus 100 may calculate, based on the result of performing the clustering the plurality of times, each of the first index based on the number of clusters, the second index based on the number of clusters, and the third index based on the number of clusters. An index based on the number of clusters may be a performance indicator that evaluates a result of performing the clustering with different p values and may be arranged in a form of a graph. Meanwhile, types of indexes calculated based on the result of performance of the clustering the plurality of times by the electronic apparatus 100 are not limited to three types of indexes. It may be clearly understood to those skilled in the art that more types of indexes may be calculated depending on example embodiments.

In an example embodiment, the first index, the second index, and the third index each may include at least one of a silhouette index technique, a Calinski-Harabasz index technique, and a Davies-Bouldin index technique that evaluate, for each result of the clustering according to the clustering algorithm, a result of the clustering based on cohesion of each cluster and inter-cluster separation. The above-described techniques may differ in a process of calculating the cohesion and the separation. For example, according to the silhouette index technique, the cohesion may be calculated based on an average of distances between each data point and all other data points in an identical cluster, and the separation may be calculated based on an average of distances between all data points in another cluster closest to each cluster. In contrast, according to the Calinski-Harabasz index technique, the cohesion may be calculated based on a square of an average of distances between each data point and a center of a corresponding cluster, and the separation may be calculated based on a square of an average of distances between a center of each cluster and centers of all data sets. Also, according to the Davies-Bouldin index technique, the cohesion may be calculated based on the average of the distances between each data point and the center of the corresponding cluster, and the separation may be calculated based on an average of distances between respective centers of the clusters.

Then, the electronic apparatus 100 may determine an optimal number of clusters for a first data set based on a first number of clusters corresponding to a maximum value or a minimum value of the calculated first index based on the number of clusters, a second number of clusters corresponding to a maximum value or a minimum value of the calculated second index based on the number of clusters, and a third number of clusters corresponding to a maximum value or a minimum value of the calculated third index based on the number of clusters. Here, the maximum value or the minimum value of the first index, the maximum value or the minimum value of the second index, and the maximum value or the minimum value of the third index each may correspond to an optimal value that is one of a maximum value and a minimum value set based on a characteristic of the index. For example, when the index is the silhouette index technique or the Calinski-Harabasz index technique, the maximum value may correspond to the optimal value. In a case of the Davies-Bouldin index technique, the minimum value may correspond to the optimal value. Meanwhile, the optimal value by index is not limited to the maximum value or the minimum value and may be set to an appropriate value depending on the characteristic of the index.

The electronic apparatus 100 may set the optimal number of clusters for the data set 1 422 (which is A1) to a repeated value among the first number of clusters, the second number of clusters and the third number of clusters. In other words, the number of clusters at which maximum values or minimum values cross as a result of evaluation with three indexes may be set to the optimal number of clusters. For example, when the first number of clusters and the second number of clusters are 184, and when the third number of clusters is 180, the optimal number of clusters may be set to 184. As such, the number of clusters which is evaluated as having the optimal value according to various index techniques may be set to the optimal number of clusters for the data set 1 422, and through this, clustering that guarantees high performance may be performed. According to another example embodiment, when all of the first number of clusters, the second number of clusters, and the third number of clusters have different values, an average value thereof may be set to the optimal number of clusters for the data set 1 422.

According to the above-described process, the primary clustering into A1 clusters of which the number is the optimal number of clusters for the data set 1 422 may be performed, and subsequently, a representative kernel of each of the A1 clusters may be generated. In other words, the A1 clusters and the A1 kernels 432 may be generated to correspond to the data set 1 422. Meanwhile, an identical process may be performed for each data set, and accordingly, a cluster and a kernel corresponding to each of the k data sets in total may be generated.

FIG. 6 illustrates a secondary clustering process according to an example embodiment.

According to an example embodiment, the electronic apparatus 100 may perform, a plurality of times, clustering of a plurality of kernels generated as a result of primary clustering so that the numbers of clusters are different depending on a clustering algorithm and determine an optimal number of clusters corresponding to the plurality of kernels based on a result of performing the clustering the plurality of times and an index evaluating a clustering result. Since a process of performing the secondary clustering is identical to the process described above in detail with respect to FIG. 5 (namely, a process of determining an optimal number of clusters for each data set), a description thereof will be omitted.

Referring to FIG. 6, the optimal number of clusters determined for the plurality of kernels may be m. Accordingly, the plurality of kernels (namely, kernels of which the number is equal to a sum of A1, A2, and the like) may be clustered into cluster 1 610, cluster 2 612, ..., and cluster m 614. Each cluster may include at least some kernels. Since being clustered based on similarity, the plurality of kernels may include kernels having patterns similar to each other. Meanwhile, as illustrated in FIG. 6, as kernels or features become more similar to each other, a pattern of brightness in each kernel or feature image may appear more similar to another.

The electronic apparatus 100 may generate, by overlapping (which is represented by reference numeral ∑) the kernels in each cluster, a driving pattern kernel representing a characteristic of each cluster. For example, driving pattern kernel 1 442 corresponding to the cluster 1 610 may be a kernel obtained by overlapping all kernels included in the cluster 1 610. While m driving pattern kernels generated as such may be in a form in which kernel shapes of corresponding clusters are further clearly reflected, a difference between the m clusters may be further distinctly shown through the driving pattern kernels.

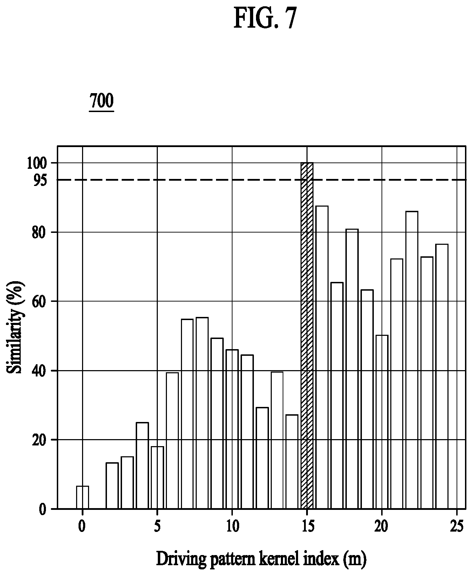

FIG. 7 illustrates a process of determining a driving pattern of a feature according to an example embodiment.

Referring to FIG. 7, in order to determine which kernel a feature newly generated after all m driving pattern kernels are generated is determined as corresponding to among the m kernels, a graph 700 may be a graph on similarity between the newly generated feature identified by the electronic apparatus 100 and the m driving pattern kernels. Accordingly, in the similarity graph 700, an x-axis may be a driving pattern kernel index (m), and a y-axis may be similarity (%). Here, the driving pattern kernel index may be an index granted to each of a generated plurality of driving pattern kernels. According to an example in which twenty-five driving pattern kernels in total are generated, the driving pattern kernel index may have a value from 0 to 24. Referring to the graph 700, a threshold value of similarity that is a reference for similarity determination may be 95, and accordingly, driving pattern kernel 15 having a similarity greater than or equal to 95% may be identified as a driving pattern kernel corresponding to the feature. Thus, the feature may be determined to have a driving pattern of the driving pattern kernel 15.

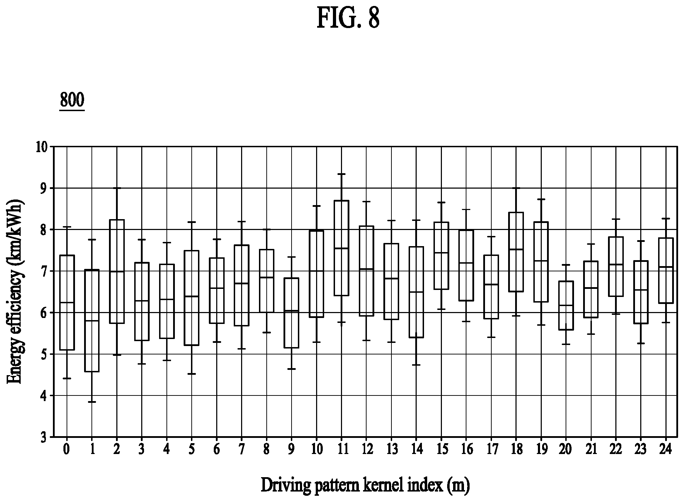

FIG. 8 illustrates an energy efficiency distribution of each driving pattern kernel according to an example embodiment.

According to an example embodiment, the electronic apparatus 100 may generate m driving pattern kernels and identify an energy efficiency distribution corresponding to each driving pattern kernel. Referring to FIG. 8, a graph 800 may be a graph showing energy efficiency by driving pattern kernel, of which an x-axis is a driving pattern kernel index (m) and a y-axis is energy efficiency (kilometer per kilowatt hour, km/kWh).

Meanwhile, although not illustrated in FIG. 8, the electronic apparatus 100 may additionally classify each driving pattern kernel by road type and may show, even in the energy efficiency distribution graph 800, a road type of each driving pattern kernel therewith. As an example, based on twenty-five driving pattern kernels, the road type corresponding to each driving pattern may be identified in response to a worker input that performs a task of data analysis, and a driving pattern kernel index may be granted so that an identical road type has adjacent indexes. As a further detailed example, when nine driving pattern kernels are identified as an urban driving type, when ten driving pattern kernels are identified as an arterial road driving type, when four driving pattern kernels are identified as a highway driving type, and when remaining two driving pattern kernels are identified as a mixed driving type among the twenty-five driving pattern kernels in response to the worker input, indexes 0 to 8 may be granted to the nine driving pattern kernels of urban driving in sequential order, indexes 9 to 18 may be granted to the ten driving pattern kernels of arterial road driving in sequential order, indexes 19 to 22 may be granted to the four driving pattern kernels of highway driving in sequential order, and then indexes 23 and 24 may be granted to the two driving pattern kernels of mixed driving type. The electronic apparatus 100 may generate and provide an energy efficiency distribution graph, which is for further easily identifying an energy efficiency distribution by road type, by identifying and graphing energy efficiency distributions in order of indexes granted as such.

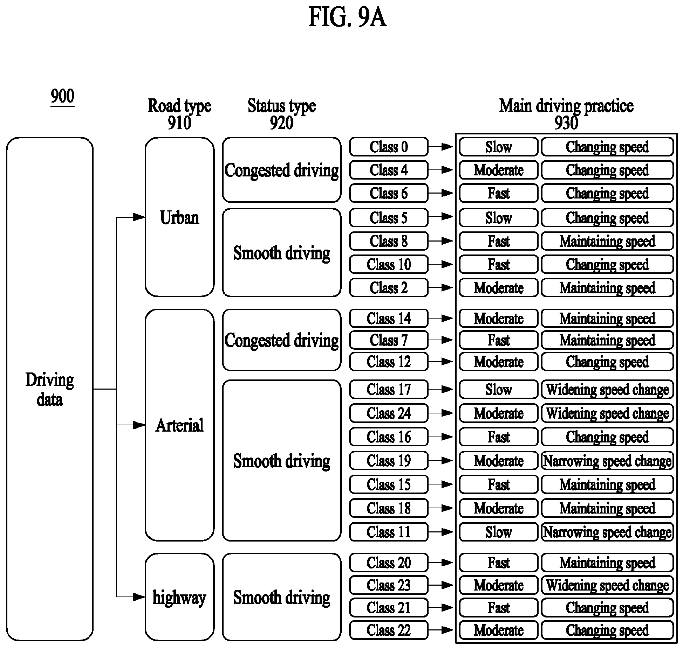

FIGS. 9A through 9B illustrate a process of providing an energy efficiency improvement method according to an example embodiment.

According to an example embodiment, the electronic apparatus 100 which generates a plurality of driving pattern kernels may subsequently acquire a plurality of pieces of driving data. The electronic apparatus 100 may identify similarity between a plurality of features, generated in a way identical to the above-described process based on the acquired driving data, and each of a plurality of driving pattern kernels and may determine a driving pattern corresponding to each feature based on the similarity.

According to an example embodiment, the electronic apparatus 100 which determines the driving pattern corresponding to each feature may identify a driving road type corresponding to the determined driving pattern, identify respective energy efficiency distributions of one or more driving pattern kernels corresponding to the identified driving road type among the plurality of driving pattern kernels, and provide, based on an optimal energy efficiency distribution thereamong, an energy efficiency improvement method corresponding to each feature of which the driving pattern is determined. For example, the electronic apparatus 100 which identifies that a driving pattern kernel corresponding to feature 1 is driving pattern kernel 15 may subsequently identify an arterial road type, which is a road type of the driving pattern kernel 15 identified in advance in response to a worker input, as a road type of the feature 1. Then, the electronic apparatus 100 may identify energy efficiency distributions of driving pattern kernels of the arterial road type through an energy efficiency distribution graph or the like and identify a driving pattern kernel having an optimal energy efficiency distribution (e.g., driving pattern kernel 11 in the graph 800) thereamong. Accordingly, the electronic apparatus 100 may provide, based on a difference between the driving pattern kernel 15 which is the driving pattern kernel of the feature 1 and the driving pattern kernel having the optimal energy efficiency distribution, information on the energy efficiency improvement method which is required for improving energy efficiency of the feature 1. That is, information that induces switching to a driving pattern of the driving pattern kernel having the optimal energy efficiency distribution may be provided. Such information on the energy efficiency improvement method may be provided, for example, through OBD of a vehicle corresponding to the feature 1.

Referring to FIG. 9A, as illustrated in a mimetic diagram 900, the electronic apparatus 100 may classify each driving pattern kernel by road type and identify a main driving practice of each driving pattern kernel. Meanwhile, a class in FIG. 9A may be a driving pattern kernel in the present disclosure. A status type 920 of each road type 910 may be subdivided into and set to at least one of congested driving and smooth driving so that the class is classified in further detail for convenience of a vehicle user that receives the efficiency improvement method. Accordingly, for example, when classes corresponding to an urban driving type are classes 0, 2, 4 to 6, 8, and 10, the electronic apparatus 100 may further classify and allocate classes 0, 4, and 6 as and to a congested driving type and classes 5, 8, 10, 2 as and to a smooth driving type. Then, the electronic apparatus 100 may identify a main driving practice 930 by class allocated to correspond to the subdivided status type 920. The main driving practice 930 of the class may be information on a main practice, which is extracted for each of speed and speed change based on a kernel of each class (e.g., one of "slow", "moderate", and "fast" and a practice of changing speed, maintaining speed, or widening speed change, or the like).

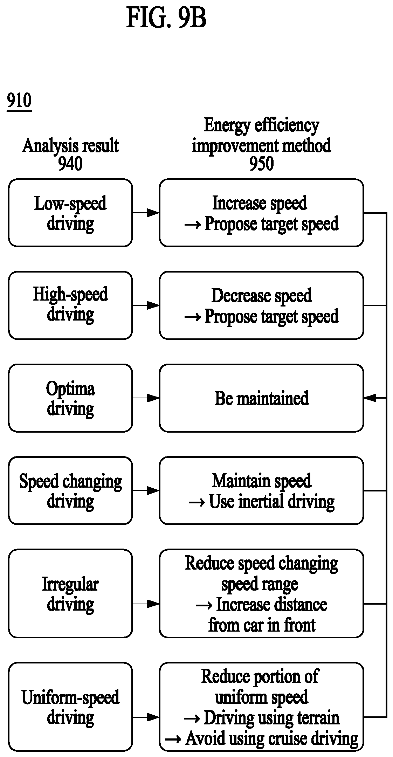

Referring to FIG. 9B, an analysis result 940 may be information on a result of analyzing a difference from a class identified as having an optimal energy efficiency by road type. Specifically, the electronic apparatus 100 may analyze, based on the main driving practice of each class identified as such in FIG. 9A, a difference from a main driving practice of a class having an optimal energy efficiency among classes classified into a road type corresponding to each class. Here, a class having an optimal energy efficiency among classes classified as an identical road type may be a class having an optimal energy efficiency among classes that belong to a road type that is a widest classification or may be, in some example embodiments, a class having an optimal energy efficiency among classes that belong to a status type of each road type (namely, the congested driving or smooth driving type), which is a narrower classification.

For example, as class 4 belongs to the congested driving of an urban road driving type, when a class having an optimal efficiency distribution among classes 0, 4, 6 belonging to the congested driving type, which is the narrower classification, of the urban driving type is class 6, the electronic apparatus 100 may a difference between the class 6 and the class 4. Each difference between classes may be analyzed based on the main driving practice 930. When an analysis result shows that the difference between the class 4 and the class 6 is a speed and that driving is slower in the class 4 compared to the class 6, the electronic apparatus 100 may identify that the class 4 corresponds to a category "low-speed driving" in the analysis result 940. In addition, accordingly, information on "Increase speed -> Propose target speed" in an energy efficiency improvement method 950 may be provided to a vehicle corresponding to the class 4. Here, a target speed may be determined to be an appropriate value based on a speed distribution of the class 6.

As described above, the electronic apparatus 100 may determine a driving pattern of driving data based on the driving pattern kernels and accordingly promptly provide a most appropriate energy efficiency improvement method depending on on what road and how driving is performed with a limited number of driving pattern kernels. Such an energy efficiency improvement method is a user-customized energy efficiency improvement method that is most appropriate for each of various cases. Thus, users may be allowed to further efficiently use batteries therethrough, and this may significantly contribute to direct cost reduction by a user.

The electronic apparatus according to the above-described example embodiments may include a processor, a memory that stores and executes program data, a permanent storage such as a disk drive, a communication port for communicating with an external device, and a user interface device such as a touch panel, a key, and an button. Methods implemented by software modules or algorithms may be stored in a computer-readable recording medium as computer-readable code or program instructions executable in the processor. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network so that computer-readable codes may be stored and executed in a dispersed manner. The medium may be read by a computer, stored in the memory, and executed by the processor.

The present example embodiments may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include the meaning of a series of routines of software in association with a processor.

The above-described embodiments are merely examples and other embodiments may be implemented within the scope of the following claims.

## Claims

1. An electronic apparatus comprising:
a transceiver;
a processor; and
one or more memories configured to store one or more instructions,
wherein when the one or more instructions are executed, the processor is configured to:
acquire a plurality of pieces of driving data on a plurality of vehicles;
generate speed distribution data corresponding to each of the plurality of pieces of driving data;
generate a plurality of features on driving patterns based on the speed distribution data corresponding to each of the plurality of pieces of driving data;
cluster the plurality of features into a plurality of clusters based on a clustering algorithm and an index evaluating a clustering result;
generate a driving pattern kernel showing a driving pattern of each of the plurality of clusters; and
determine, based on similarity to the generated plurality of driving pattern kernels, a driving pattern of a feature generated after the plurality of driving pattern kernels is generated.

2. The electronic apparatus of claim 1, wherein each of the plurality of pieces of driving data comprises information on speeds over time during driving of a respective one of the plurality of vehicles.

3. The electronic apparatus of claim 1, wherein when the one or more instructions are executed, the processor is configured to:
identify one or more driving action types based on first driving data among the plurality of pieces of driving data;
identify a speed range of one or more driving actions corresponding to a first type among the one or more driving action types;
identify, for each speed range of the one or more driving actions, a driving action start speed and a driving action end speed;
estimate each of a distribution of driving action start speeds corresponding to the first type and a distribution of driving action end speeds corresponding to the first type; and
generate first speed distribution data including the distribution of the driving action start speeds and the distribution of the driving action end speeds.

4. The electronic apparatus of claim 3, wherein, when the one or more
instructions are executed, the processor is configured to further identify a traveling distance of the one or more driving actions corresponding to the first type,
the distribution of the driving action start speeds is a probability distribution estimated by granting a weight to the traveling distance of the one or more driving actions, and
the distribution of the driving action end speeds is a probability distribution estimated by granting a weight to the traveling distance of the one or more driving actions.

5. The electronic apparatus of claim 3, wherein when the one or more instructions are executed, the processor is configured to generate, based on the first speed distribution data, a first feature showing a frequency of a speed range corresponding to each of the one or more driving action types.

6. The electronic apparatus of claim 1, wherein when the one or more instructions are executed, the processor is configured to:
classify the plurality of features into a predetermined number of data sets by sampling the plurality of features;
determine, based on the clustering algorithm and the index evaluating the clustering result, a number of clusters, which corresponds to each of the predetermined number of data sets;
perform first clustering, of the plurality of features which is included in each of the data sets, into clusters of which a number is the number of clusters determined for each of the data sets;
generate a kernel of each of one or more clusters generated by performing the first clustering;
determine, based on the clustering algorithm and the index evaluating the clustering result, an optimal number of clusters, which corresponds to the generated one or more kernels; and
perform second clustering of the one or more kernels into clusters of which a number is the optimal number of clusters, and
the driving pattern kernel is a kernel showing a driving pattern of each of clusters of which number is the optimal number of clusters and which are generated by performing the second clustering.

7. The electronic apparatus of claim 1, wherein the similarity between the feature, generated after the plurality of driving patterns kernels is generated, and the generated plurality of driving patten kernels is calculated based on a Jensen-Shannon divergence (JSD) technique that calculates similarity between probability distributions.

8. The electronic apparatus of claim 1, wherein when the one or more instructions are executed, the processor is configured to determine, by identifying that the feature generated after the plurality of driving pattern kernels is generated corresponds to a first driving pattern kernel of which a value of similarity is greater than or equal to a threshold value among the plurality of driving patterns, the driving pattern of the feature generated after the plurality of driving pattern kernels is generated.

9. The electronic apparatus of claim 6, wherein when the one or more instructions are executed, the processor is configured to:
perform clustering of a first data set among the predetermined number of data sets a plurality of times so that numbers of clusters are different depending on the clustering algorithm; and
determine a number of clusters corresponding to the first data set based on a result of performing the clustering the plurality of times and the index evaluating the clustering result.

10. The electronic apparatus of claim 9, wherein the index includes a first index, a second index, and a third index, and
when the one or more instructions are executed, the processor is configured to:
calculate, based on the result of performing the clustering the plurality of times, each of the first index based on a number of clusters, the second index based on a number of clusters, and the third index based on a number of clusters; and
determine an optimal number of clusters for the first data set based on a first number of clusters corresponding to a maximum value or a minimum value of the first index based on the calculated number of clusters, a second number of clusters corresponding to a maximum value or a minimum value of the second index based on the calculated number of clusters, and a third number of clusters corresponding to a maximum value or a minimum value of the third index based on the calculated number of clusters.

11. The electronic apparatus of claim 6, configured to:
perform clustering of the one or more kernels a plurality of times so that numbers of clusters are different depending on the clustering algorithm; and
determine an optimal number of clusters corresponding to the one or more kernels based on a result of performing the clustering the plurality of times and the index evaluating the clustering result.

12. The electronic apparatus of claim 11, wherein the index includes a first index, a second index, and a third index, and
when the one or more instructions are executed, the processor is configured to:
calculate, based on the result of performing the clustering the plurality of times, each of the first index based on a number of clusters, the second index based on a number of clusters, and the third index based on a number of clusters; and
determine an optimal number of clusters corresponding to the one or more kernels based on a first number of clusters corresponding to a maximum value or a minimum value of the first index based on the calculated number of clusters, a second number of clusters corresponding to a maximum value or a minimum value of the second index based on the calculated number of clusters, and a third number of clusters corresponding to a maximum value or a minimum value of the third index based on the calculated number of clusters.

13. The electronic apparatus of claim 1, wherein when the one or more instructions are executed, the processor is further configured to:
identify a driving road type corresponding to the determined driving pattern;
identify respective energy efficiency distributions of one or more driving pattern kernels corresponding to the driving road type among the plurality of driving pattern kernels; and
provide, based on an optimal energy efficiency distribution among the identified respective energy efficiency distributions of the one or more driving pattern kernels, an energy efficiency improvement method corresponding to the feature of which the driving pattern is determined.

14. A method of analyzing a driving pattern of a vehicle, the method performed by an electronic apparatus and comprising:
acquiring a plurality of pieces of driving data on a plurality of vehicles;
generating speed distribution data corresponding to each of the plurality of pieces of driving data;
generating a plurality of features on driving patterns based on the speed distribution data corresponding to each of the plurality of pieces of driving data;
clustering the plurality of features into a plurality of clusters based on a clustering algorithm and an index evaluating a clustering result;
generating a driving pattern kernel showing a driving pattern of each of the plurality of clusters; and
determine, based on similarity to the generated plurality of driving pattern kernels, a driving pattern of a feature generated after the plurality of driving pattern kernels is generated.

15. A non-transitory computer-readable recording medium in which a program for executing the method of claim 14 on a computer is recorded.
